Europäisches Patentamt

European Patent Office

Office européen des brevets

(11) Publication number: **0 173 818**
**B1**

# EUROPEAN PATENT SPECIFICATION

(45) Date of publication of patent specification: **26.09.90**

(21) Application number: **85108327.9**

(22) Date of filing: **05.07.85**

(60) Divisional application 87118635 filed on 16.12.87.

(51) Int. Cl.⁵: **B 29 C 49/42**, B 29 C 31/00

(54) Preparation of hollow plastic articles.

(30) Priority: **07.09.84 US 648793**
**14.05.85 US 733969**

(43) Date of publication of application:
**12.03.86 Bulletin 86/11**

(45) Publication of the grant of the patent:
**26.09.90 Bulletin 90/39**

(84) Designated Contracting States:
**AT BE CH DE FR GB IT LI LU NL SE**

(56) References cited:
EP-A-0 026 895
EP-A-0 060 521
EP-A-0 069 007
FR-A-2 394 381
GB-A-2 097 322
US-A-3 149 373
US-A-3 339 230
US-A-4 313 720
US-A-4 313 905
US-A-4 426 202

(73) Proprietor: **HUSKY INJECTION MOLDING
SYSTEMS LTD.**
**500 Queen Street South**
**CA-Bolton, Ontario L0P 1A0 (CA)**

(72) Inventor: **Schad, Robert, D.**
**500 Queen Street South**
**Bolton Ontario L0P 1A0 (CA)**
Inventor: **Hughes, Gary**
**P.O. Box 52**
**Nobleton, Ontario L0G 1N0 (CA)**
Inventor: **Rees, Herbert**
**RR 5**
**Orangeville, Ontario L9W 2Z2 (CA)**
Inventor: **Murchie, John R.**
**2 Ottawa Court**
**Aurora, Ontario L4G 2Y7 (CA)**

(74) Representative: **Weiss, Peter**
**Schlachthausstrasse 1 Postfach 466**
**D-7700 Singen a.H. (DE)**

## Description

The present invention concerns a system for handling partly finished workpieces according to the first part of claim 1. Especially the present invention relates to a system for producing, by injection or compression molding (collectively referred to as pressure molding), partly finished workpieces which are transferred sequentially to one or more aftertreatment stations for the performance of secondary operations thereon. In particular, the workpieces may be parisons of polymeric material and the secondary operations may be a thermal conditioning thereof followed by their transformation into hollow articles, such as containers, by blowing with or without mechanical stretching.

A system for conveying parisons or preforms by means of pallets into and out of a blow molding station has been described in US—A—4 426 202. According to that patent, the parisons or preforms presumably molded at a remote location are carried in groups on rotatable collets of roller-supported pallets which move on a track to the blow molding station where each parison is introduced between two open mold halves, subsequently closing therearound for transforming same into bottles. During the blow and briefly thereafter, the parisons and the bottles formed therefrom remain attached by their necks to the collets of their pallets which, however, do not otherwise participate in the blow molding operation. On the contrary, as expressly stated in the patent, the support of the preforms, i.e. the engagement of their flanges for holding them in position, is transferred from the pallet to the blow mold during the blowing operation. Nothing is said about where or how the pallets, which are separated from their track after the blow, are loaded and unloaded.

According to the US—A—4 354 813 there are shown a plants for drawing-blowing a preform in plastic material comprising a reception station, a conditioning and heating device, a drawing-blowing station and an extraction station. The preforms are dropped loosely onto a vertical pallet pipe. But there the preforms are not tightly gripped so that they may vibrate during transit around the track. Consequently, they do not uniformly rotate as they pass through the oven and may be unevenly heated.

Furthermore the drawing-blowing happens between two mold halves. Both mold halves touch directly the preforms. Therefore in case there are variations in the wall thickness either the mold halves cut in the wall or the wall is spaced from the pipe and a blowing of preforms is impossible.

A major object of the present invention is to provide an efficiently operation system for the continuous recirculation of a sufficient number of pallets between a receiving station, at which they are to be loaded with workpieces yet to be finished, and one or more aftertreatment stations for further handling and finishing.

Another object is to provide a system of this nature in which the loading of the pallets with newly arriving workpieces, their transportation to the aftertreatment stations, their handling in the matter stations and the return of the pallets to the receiving station are precisely synchronized with one another and with the source of the workpieces, e.g. an injection molding machine, to provide the desired high degree of efficiency.

It is also an object of the present invention to provide an improved pallet structure for a system of this type which enables accurate location and secure retention of each parison in a finishing station, particularly in a blow molding station in which it is inflated with or without the use of a stretching rod.

A more particular object of the present invention is to synchronize the operation of a premolding apparatus, specifically an injection molding machine, with those of a temperature conditioning and a blow molding station, having regard to the fact that an operation cycle of the latter station is considerably shorter than that of an injection molding machine so that the difference in timing has to be taken into account. Since the overall number of available pallets will normally be limited, our invention further aims at insuring a return of unloaded pallets to the loading point in time for having them receive the newly arriving partly finished workpieces in keeping with the cycle of the injection molding machine.

These objects are solved by a system characterized in that locating means are provided for temporarily consolidating the respective pallet with an operative part of said finishing station to obtain the proper positioning of said workpiece with reference thereto, said finishing station comprises a blow mold, and that said operative part comprises blow mold means clampingly engageable with said locating means during a blowing operation.

In the specific instance where the workpieces are parisons previously molded in a pressure molding machine, the presentation means may comprise a take-off plate picking up a group of freshly molded parisons for delivery to a number of pallets sufficient to receive them. This will enable the pressure molding machine to operate in synchronism with the finishing station even though their cycles may be different from each other. When the finishing station comprises a blow mold, designed to convert the parisons into end products such as containers, the locating means of the pallets may be clampingly engaged by coacting extensions of a pair of blow mold halves during a blowing operation.

Such a pallet, pursuant to another feature of our invention, comprises a body engageable by the conveyor means during transportation, either between flights mounted on the conveyor surface or with the aid of depending formations fitting between chain links of the conveyor. The holding means may comprise one or more rotatable plugs each engageable with a neck of a parison while the locating means may be formed by a socket wherein each plug is journaled for independent rotation. The plug advantageously has a central bore accommodating both a parison-inflating pressure fluid and a parison-stretching core rod at the blow molding station when the pallet is arrested there by the gripping of its socket between the mold halves.

In accordance with a more particular feature of our invention, the conveyor means may include a first branch moving from the receiving station to the finishing station and a second branch moving from the finishing station to the receiving station, the two branches being interlinked by first transfer means synchronized therewith for moving the pallets from a downstream part of the second branch to an upstream part of the first branch by way of the receiving station, with loading of each passing pallet at the receiving station by at least one newly arrived workpiece, and by second transfer means synchronized therewith for moving the pallets from a downstream part of the first branch to an upstream part of the second branch by way of the finishing station, with unloading of each passing pallet ahead of the second branch.

It is often desirable to let the freshly molded parisons, still hot except at their neck, traverse a tempering chamber on their way to the blow molding station, i.e. while being entrained by the first conveyor branch. Such a tempering chamber, constituting another aftertreatment station preceding the finishing station, is designed to minimize the loss of heat stored in the body of each parison and, if necessary, to redistribute the heat profile of that body in a manner suitable for the blowing step. Thus, the chamber may be provided with heating and/or cooling means to which each parison ought to be uniformly exposed around its entire periphery. The plugs, therefore, advantageously are rotatably journaled in their pallets and are engageable by drive means for setting them together with their parisons in rotation for such uniform exposure.

If the parisons are produced by an injection molding machine whose operating cycle lasts $n$ times as long as that of the blow molding or other finishing station, each injection cycle ought to produce $n$ times as many parisons as can be handled in a single finishing cycle. The latter number preferably equals the number of parisons transportable by one pallet so that $n$ pallets should be loaded simultaneously at the receiving station but are to be successively moved into the finishing station. Preferably, an ejection or discharge station immediately following the last aftertreatment, e.g. the blowing station, is used for the unloading of each pallet with the aid of air, some other fluid under pressure or suction, or mechanical means introduced from below into the parison necks so as to dislodge the end products from the pallets. These end products could also be removed from the pallets directly at the last aftertreatment station, if desired.

The above and other features of our invention will now be described in detail with reference to the accompanying drawings in which:

Fig. 1 is a top view of a transportation system according to our invention, serving for the conveyance of freshly molded parisons available at a receiving station to a tempering chamber and then to a blow molding station by means of pallets and for the return of the empty pallets to the receiving station;

Fig. 2 is a cross-sectional view of the system, taken on the line II—II of Fig. 1;

Fig. 3 is a side-elevational view, partly in section and drawn to a larger scale, of a pallet carrying two parisons about to be finished in the blow molding station;

Fig. 4 is a side elevational view of an alternate type of conveyor usable in our present system;

Fig. 5 is a fragmentary end view, partly in section, of the conveyor shown in Fig. 4;

Fig. 6 is a perspective view of a preferred embodiment of the apparatus of the present invention;

Fig. 6A is a top view of a preferred embodiment of the apparatus of the present invention;

Fig. 7 is a cross-sectional view along the lines 7—7 of Fig. 6A;

Fig. 8 is a cross-sectional view along the lines 8—8 of Fig. 6A;

Fig. 8A is a perspective view of the pusher means shown in Fig. 8;

Fig. 9 is a cross-sectional view along the lines 9—9 of Fig. 6A;

Fig. 10 is an isometric view of the finishing station shown in Fig. 6A;

Fig. 10A is a schematic view of the finishing station;

Fig. 10B is a perspective view of the engaging means for moving the pallets into the finishing station and out of the finishing station.

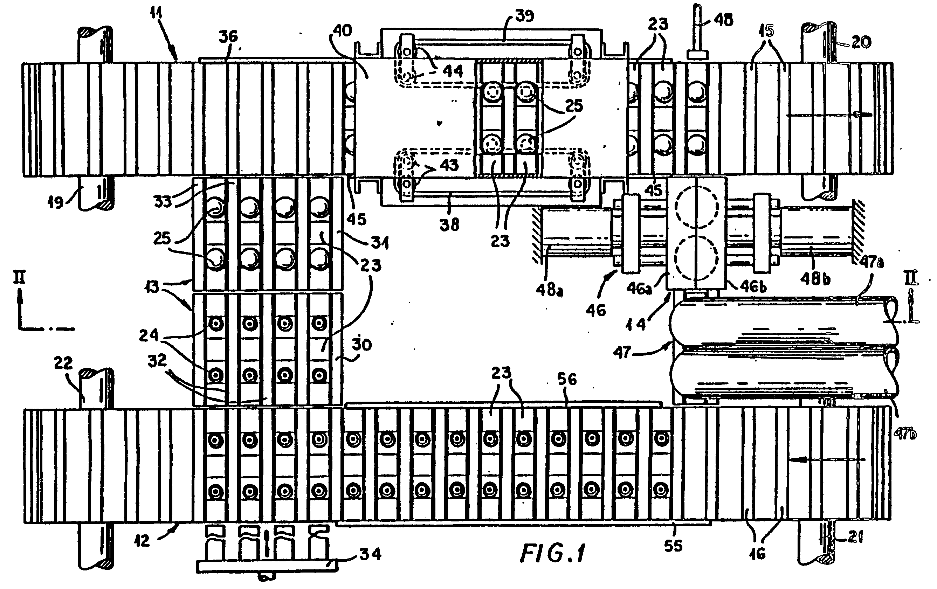

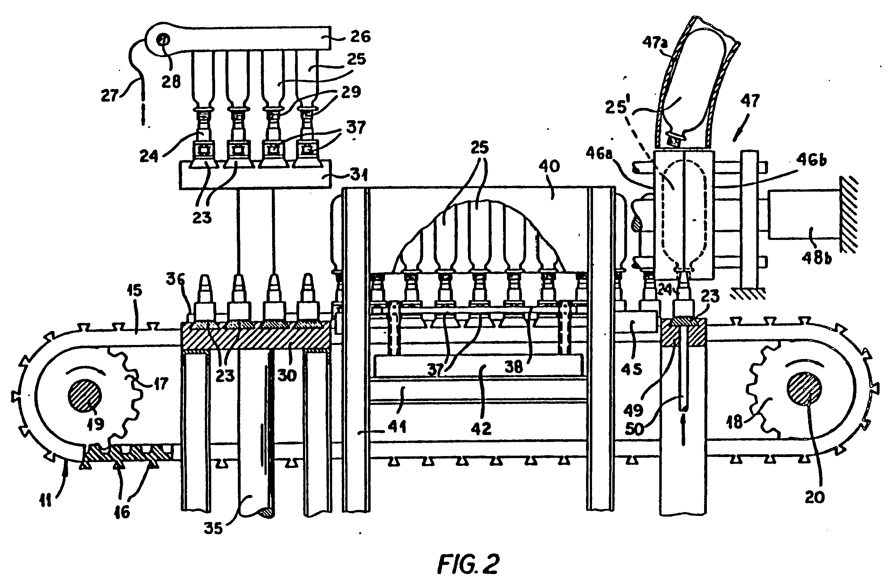

The system for the production, transportation and finishing of parisons shown in Figs. 1 and 2 as a representative embodiment of our invention includes transportation means constituted by two parallel conveyor branches 11, 12 and transfer paths 13 and 14 perpendicular thereto. Each conveyor branch 11, 12 comprises an endless belt 15 provided with equispaced flights 16 as best illustrated for branch 11 in Fig. 2. As also illustrated for branch 11 in Fig. 2, the belt 15 is wound about an upstream sprocket 17 and a downstream sprocket 18 carried by shafts 19 and 20. Other shafts 21 and 22 are respectively keyed to an upstream sprocket and a downstream sprocket of branch 12, at least one shaft of each branch being coupled with a non-illustrated intermittently operating drive displacing their belts in mutual synchronism but in opposite directions. Thus, the upper run of belt 15 of branch 11 moves from left to right, as viewed in Figs. 1 and 2, while the corresponding run of the other branch moves from right to left.

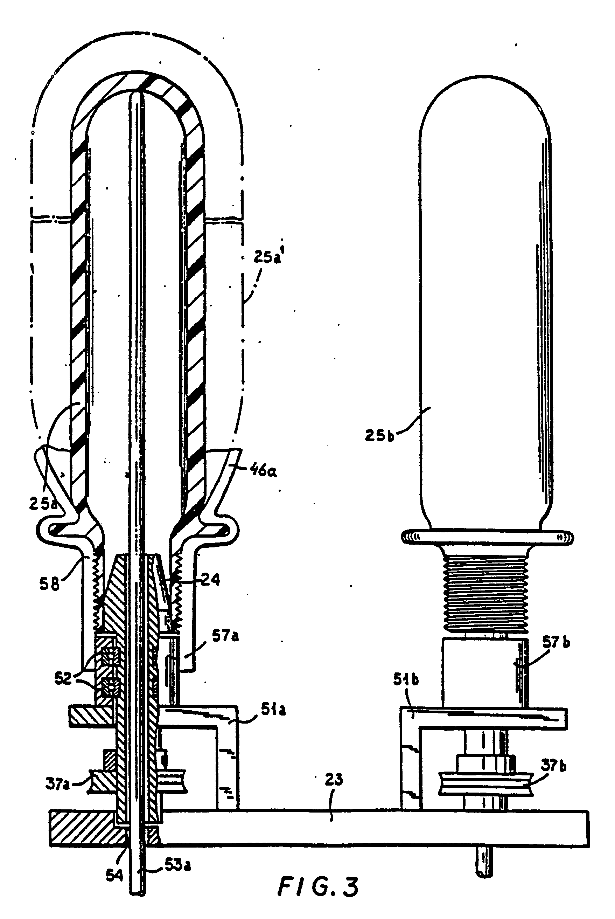

The beveled flights 16 of each band are designed to accommodate respective pallets 23 fitting closely into the intervening spaces. Each pallet, as more fully described hereinafter with reference to Fig. 3, is provided with one or more (here two) upstanding plugs 24 designed to receive parisons 25 which are produced in an injection molding machine (not shown) mounted at an elevated level above transfer path 13. That machine produces, during each of its operating cycles, a multiplicity of parisons 25 (here eight), to be received by a suitable number of pallets, which are extracted from between its mold portions by a take-off plate 26 as described, for example, in commonly owned U.S. Patent No. 3,454,991. In its original retrieval position, plate 26 confronts four rows of two cores each on one of the spaced-apart mold portions on which respective parisons 25 have been formed; plate 26 has eight seats in which the closed ends of these parisons are held under suction applied via a tube 27. After the plate 26 with its eight parisons has been extracted from the injection mold, it is swung about a shaft 28 into the horizontal presentation position shown in Fig. 2 in which the parisons are vertical with neck portions 29 hanging down.

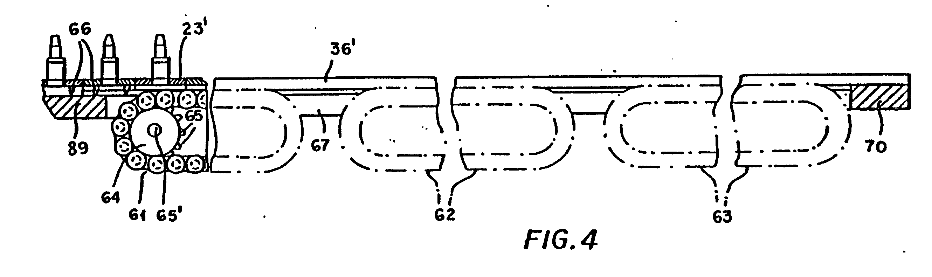

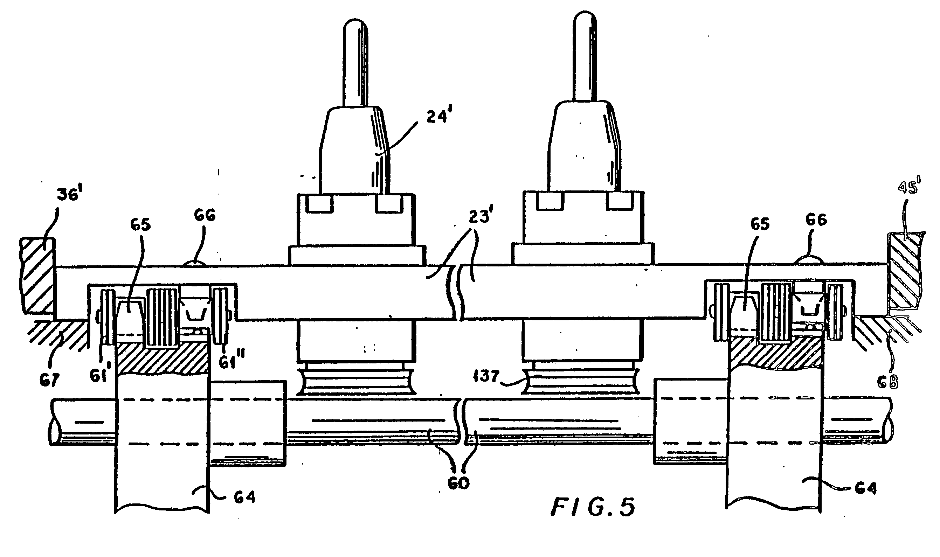

Transfer path 13 comprises a stationary platform 30 and an elevatable platform 31 in series with each other, platform 31 and take-off plate 26 together constituting a receiving station. Each of these platforms is of rectangular outline and of a width (in the direction transverse to the conveyor motion) sufficient to accommodate the length of a pallet. A set of five flights 32, 33 on these platforms, of the same profile as the conveyor flights 16, are aligned with one another and with respective flights 16 at a particular instant when branches 11 and 12 are briefly halted; the aligned flights define four parallel tracks. At such an instant a 4-pronged pusher 34 is thrust into the last pallet containing interflight gaps of branch 12 to move the pallets thereof into corresponding gaps of platform 30 while dislodging the pallets previously seated therein into aligned gaps of platform 31 which in that part of a cycle is coplanar with platform 30 and the upper runs of branches 11, 12. Alternate ways to engage pallets 23 with the conveyor branches, which do not require halting same for loading, are available as discussed hereinafter with reference to Figs. 4 and 5 and are usable in the system of our present invention. Platform 31, mounted atop a vertically reciprocable piston rod 35 of an otherwise non-illustrated fluidic jack, is then raised to an elevated level (Fig. 2) so that the four empty pallets now present thereon approach the take-off plate 26 horizontally overlying same at this moment. The plugs 24 of the four pallets thereupon engage the necks of the parisons depending from plate 26 while the suction retaining the parisons on that plate is released. Upon the immediately following descent of the platform 31 with its loaded pallets, the latter are aligned with four empty gaps of branch 11 which has advanced by four steps since the last four pallets were received thereon from platform 31 by the aforedescribed thrust of pusher 34. The same four steps have also brought a new set of pallets on branch 12 into line with platforms 30 and 31 so that a new thrust of pusher 34 will shift the pallet sets from branch 12, platform 30 and platform 31 to platform 30, platform 31 and branch 11, respectively. Meanwhile, another injection molding cycle has been completed and take-off plate 26 has been reinserted between the reopened mold portions to pick up a new set of parisons 25 even as the pallets carrying the previously extracted parisons are advanced by conveyor branch 11 to the right as viewed in Figs. 1 and 2. A ledge 36 at the far edge of branch 11 prevents the oncoming pallets from overshooting the conveyor band.

As seen in Fig. 1 the pallets each have a longitudinal axis perpendicular to the direction of conveyor motion. Naturally, we could readily align the pallets so that they will be carried by the conveyor with their longitudinal axis parallel to the direction of travel, e.g. to transport a single row of preforms.

The plugs 24, which are rotatably journaled in their pallets as more fully described hereinafter with reference to Fig. 3, carry pulleys 37 which are accessible from opposite ends of each pallet for engagement by a pair of endless belts 38, 39 disposed underneath a tempering chamber 40 overlying the conveyor branch 11. Chamber 40 has an at least partly open entrance end admitting the two rows of parisons entrained by that branch. Only the portion of the parisons that are to be heat treated, however, pass through the chamber while the ones that are not to be tempered, e.g. the necks 29, project through bottom slots of the chamber so as to be continuously exposed to the atmosphere. A frame 41 supporting the chamber 40 carries a driving unit 42 which rotates two sets of pulleys 43, 44 embraced by the belts 38 and 39. Through their frictional contact with pulleys 37, these belts turn each parison about its own vertical axis as it passes through chamber 40. It should be noted that, during such passage and thereafter, the pallets are guided by the aforementioned ledge 36 and by another, shorter ledge 45 extending along the opposite edge of branch 11.

Tempering chamber 40 may contain heating and/or cooling elements, not shown, to which the continuously rotating parisons 25 are uniformly exposed.

In contradistinction to transfer path 13 with its four parallel tracks, transfer path 14 has only a single track which passes through a finishing station, in this instance a blowing station 46, and an ejection station 47. Each of these stations has a length substantially equal to that of a pallet. With the conveyor bands temporarily halted, the last pallet to arrive at the downstream end (right) of branch 11 is thrust by a pusher 48 into blowing station 46 while the pallet previously located there, carrying finished products 25' resulting from the blowing of its parisons, is advanced by the same motion into the ejection station 47 where these finished products, i.e. bottles, are discharged by air pressure as seen in Fig. 2. Alternatively, suction from above could be used for extraction of the products. The pallet previously unloaded in station 47 by this procedure is concurrently shoved into an aligned interflight gap of conveyor branch 12 for return to the downstream end of this branch and recirculation over transfer path 13 with the aid of pusher 34.

Station 46 comprises a blow mold which may be of single-piece construction or, as here shown, composed of two blow mold halves 46a, 46b which are separable by associated jacks 48a, 48b to make room for a new parison loaded pallet while letting the pallet carrying previously formed bottles leave the blow mold. As seen in Fig. 2, the pallets traveling on transfer path 14 are guided by a throughgoing rail 49 centered with reference to stations 46 and 47. In principle, however, it is also possible to hold one blow mold half (e.g. 46a) stationary, at a location withdrawn from that shown in the drawing, and to reciprocate the other half with reference thereto between an open and a closed position, a section of rail 49 being transversely shiftable to let the pallet present in that station move concurrently with the reciprocable mold half (46b) to bring its parisons into the cavities of the stationary half before the blow and thereafter withdraw the final products during the mold opening stroke to restore the continuity of that rail 49.

Ejection station 47 comprises two discharge tubes 47a, 47b positioned to overlie the two freshly blown bottles on an incoming pallet. Two conduits 50 (only one shown) pass through the rail 49 to the underside of the pallet so as to be respectively aligned with its necks 24 when the pallet comes to rest in station 47. Air under pressure flowing through these conduits lifts the bottles off these necks and drives them through the tubes 47a, 47b into a non-illustrated receptacle or onto an ancillary conveyor.

Pushers 34 and 48 must, of course, be properly synchronized with the stepping motion of the conveyor branches for satisfactory operation of the system as described above.

Reference will now be made to Fig. 3 for a more detailed description of a representative pallet 23. The pallet body carries a pair of brackets 51a, 51b with flanges spacedly overhanging its rectangular base. Plugs 24, serving as holding means respectively engaging two parisons 25a, 25b, have stems journaled by means of ball bearings 52 in sockets 57a, 57b and carry pulleys 37a, 37b, as described above, on their lower extremities. The stems are hollow and, in the blowing station 46, are penetrated by core rods 53a and 53b capable of being thrust up to stretch the parisons axially prior to the admission of fluid pressure thereinto. There is sufficient clearance around these rods to let air under pressure flow into the parisons to expand same against the walls of the corresponding mold cavities as indicated at 25a' for parison 25a. Holes 54 in the pallet, traversed by the stretching rods and the air blasts in station 46, may serve in station 47 for the admission of the ejection air. To align the parison with the cavity formed by the blow mold halves 46a and 46b in the closed position and to assure that the axes of the parison and the cavity coincide with sufficient accuracy for the production of bottles with negligible circumferential wall thickness variation, sockets 57a and 57b serving as locators are accurately spaced and machined, and the blow mold halves contain equally accurate cavity extensions 58. Upon closure of the blow mold, plugs 24 and the pallets carrying them thus effectively form part of the blow mold.

Upon returning from transfer path 14 to transfer path 13 on the reverse branch 12, the pallets 23 are also guided between a pair of stationary ledges 55, 56 as seen in Fig. 1.

In Figs. 4 and 5 we have schematically illustrated the possibility of using several sequential chain pairs 61, 62, 63 in lieu of the throughgoing conveyor band of, say, branch 11. The chains of each pair are driven by respective sprocket wheels 64 keyed to a shaft 60 coupled with a non-illustrated motor. Each chain is divided into two halves, indicated at 61' and 61'' in Fig. 5, respectively passing around an outer half and an inner half of the associated sprocket. One sprocket half carries teeth 65 engaging in the meshes of the corresponding chain half 61'. Similar but oppositely facing teeth 66 depend from the base of a pallet 23' to be entrained, these latter teeth penetrating into the meshes of the other chain half. Pallets 23', with plugs 24' and pulleys 37', are generally similar to those described above and are guided between ledges 36', 45' while riding on shelves 67, 68 flanking the chains.

In this instance, the pallets cannot be transversely loaded onto and unloaded from the conveyors. Thus, a set of four pallets to be entrained by the cascaded chain pairs 61—63 through the tempering chamber 40 and toward the finishing station 46 and the ejector station 47 of Figs. 1 and 2 will have to be deposited first on a table 69 interconnecting the shelves 67 and 68 ahead of the first chain pair 61 on which these pallets are then thrust by a non-illustrated pusher into engagement with chain pair 61.

At the end of this chain pair, the pallets are pushed over an intervening portion of shelves 67, 68 onto chain pair 62 and from there in an analogous manner onto chain pair 63 which discharges them onto a table 70 for further transportation through the finishing station. The middle pair of chains 62 may be used to convey the pallets through the tempering chamber 40 of Figs. 1 and 2.

With such sequential conveyors it is possible to drive the several chain pairs 61, 62 and 63 at different speeds for optimal exposure of the parisons to the several work stations and to different zone locations within the tempering chamber, with the pallets spaced apart on each chain pair according to its velocity. Typically, the tempering chamber is divided into several such zones, each imparting a different temperature to the parisons, depending on the temperature of the heating or cooling means within each zone and the time of exposure of the parisons thereto. In order to control the effect of these zones upon the parisons, not only their temperature may be varied, as is conventionally done, but also the time of exposure which in many instances is more reliable as a method of control.

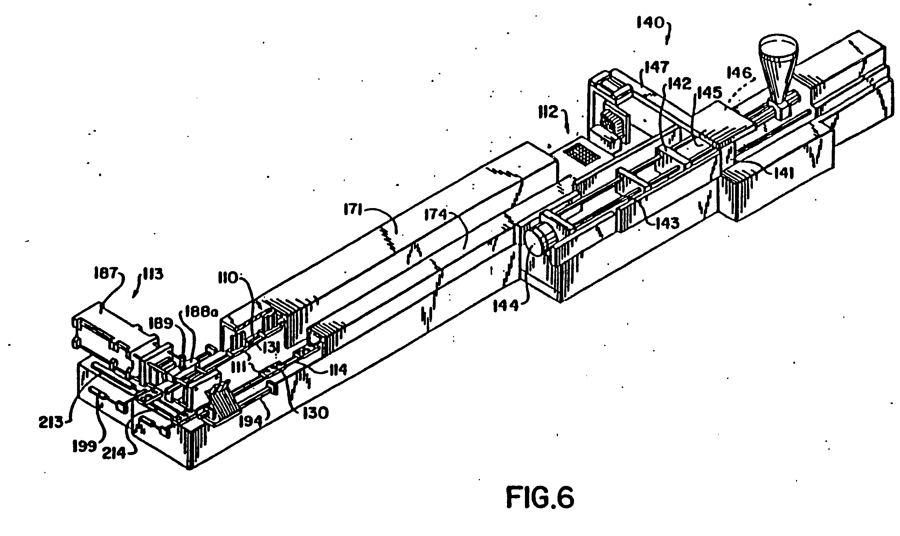

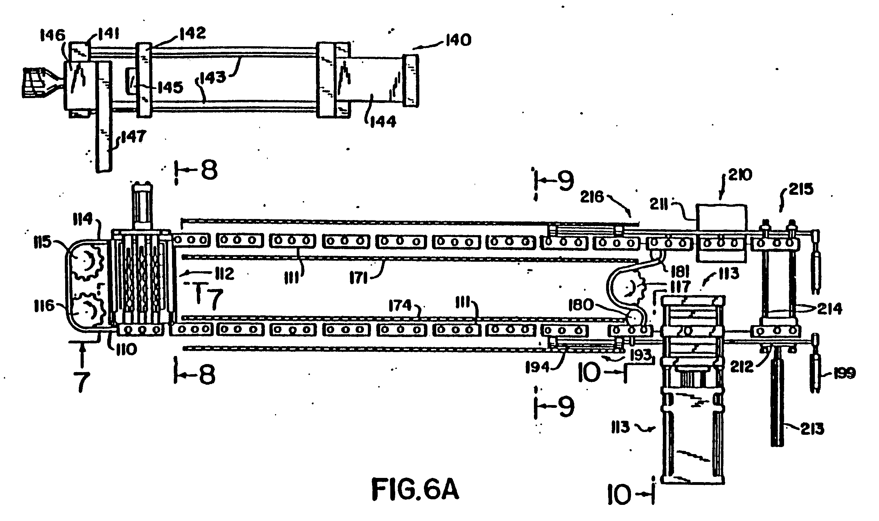

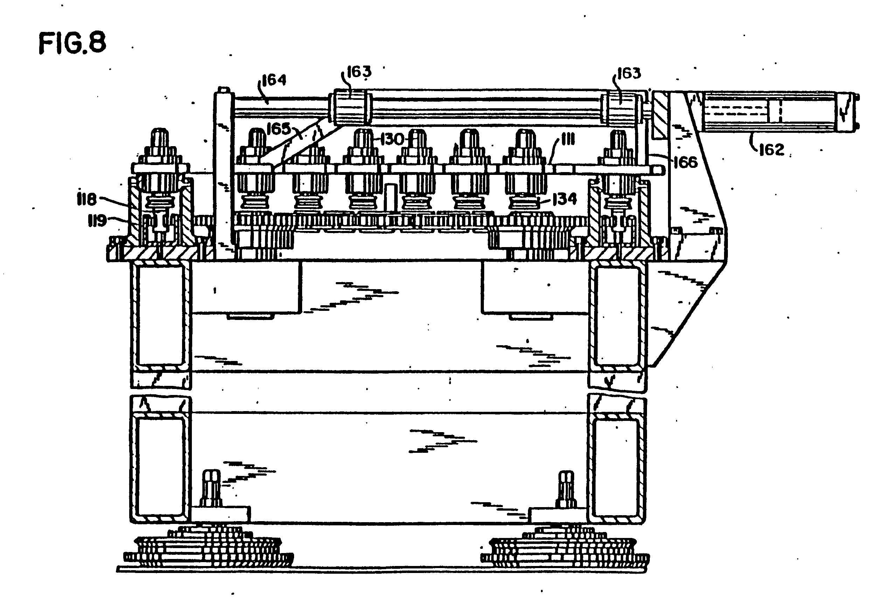

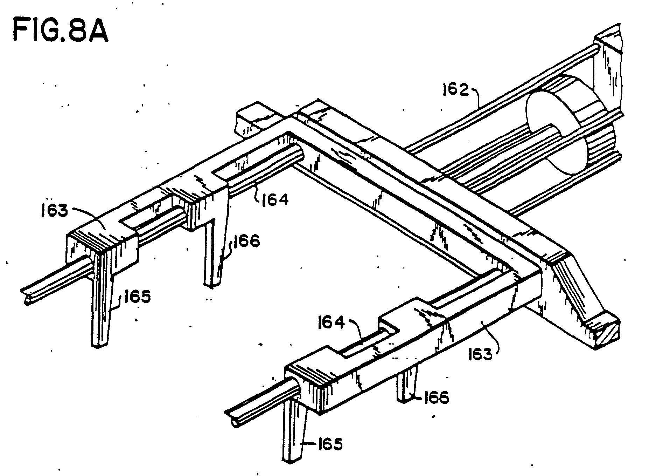

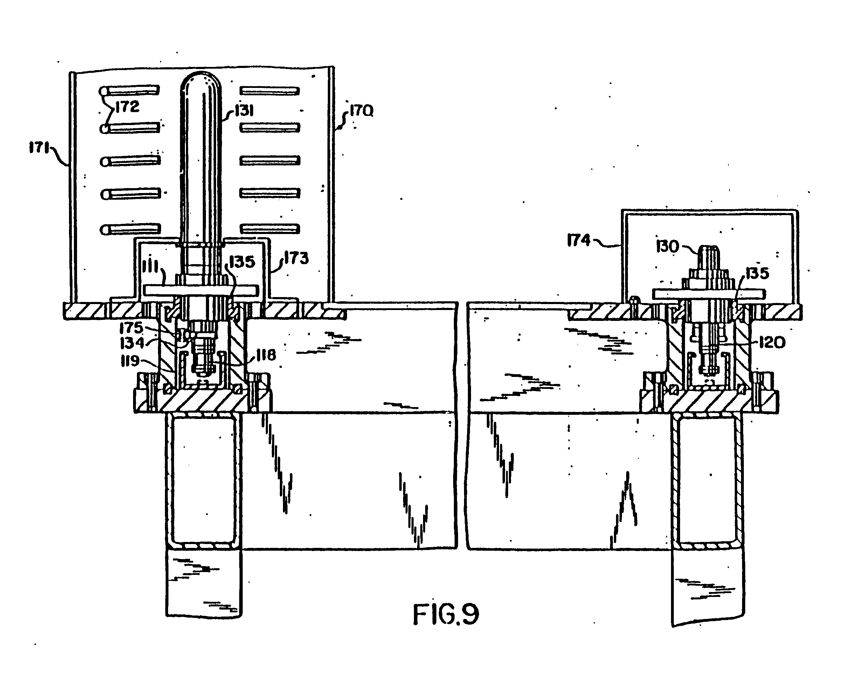

In a preferred embodiment of the present invention shown in Figs. 6 and 6A, first conveyor means 110 transports pallets 111 from receiving station 112 to finishing station 113. The empty pallets are returned to the receiving station 112 via second conveyor means 114. Thus, as seen in Fig. 6A the first conveyor means moves from left to right and the second conveyor means moves from right to left. The conveyor means preferably comprises a continuous chain or belt as shown, although separate, synchronized chain sections may be used. Sprockets 115, 116 and 117 are shown engaging chain links 118 of the conveyor means for moving same in a rotary direction, see Figs. 8 and 9. Thus, as shown in Fig. 6A, sprockets 115 and 116 move counterclockwise and sprocket 117 moves clockwise so that the chain links and hence the conveyor means are transported in a desired direction. Any desired motive means may be utilized to power any one or more of the sprockets so that, for example, one sprocket may be powered and the others may freely rotate. Chain guides 119 are provided around chain links 118 in order to guide same in their path. Means are provided associated with the conveyor means and engageable with the pallets for pushing the pallets along the conveyor means, such as pusher means 120 connected to chain links 118 which engage the base of pallets 111 in order to push the pallets along their path. These can be clearly seen in Fig. 9.

The pallets 111 contain a desired number of parison holding means or plugs 130 for holding parisons 131 via the open neck thereof 132, with three such plugs per pallet shown in the drawings. Pallets 111 comprise a platform member 133 supporting parison holding means or plugs 130 which are rotatably journaled to pulley means 134 beneath platform member 133 so that the pulley means 134 and hence the plugs may be rotated in a clockwise or counterclockwise direction as desired. Any number of parison holding means or plugs 130 may be selected for each pallet. Generally, the number of plugs per pallet will correspond to the number of blow molds at the finishing station to be described hereinbelow. Pallets 111 are guided by channel track 135 as they move on the conveyor means.

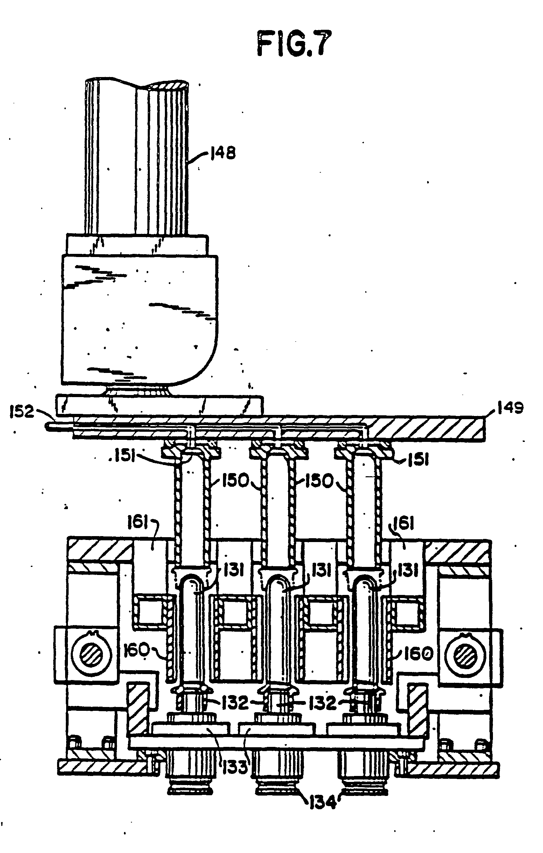

The parisons are preferably delivered to the receiving station as the output of an associated injection molding machine, although other parison preparation or delivery means may be used, for example, compression or extrusion molding. In the preferred embodiment as shown in Figs. 6 and 6A, injection molding machine 140 prepares the appropriate number of parisons based on the capacity of the injection molding machine. Naturally, any desired injection molding configuration may be used. As shown in Figs. 6 and 6A, the injection molding machine includes a fixed platen 141 and a movable platen 142. The movable platen moves on tie rods 143 via machine clamp 144. Mold means 145 are provided between the fixed and movable platen to prepare the desired number of parisons. Carrier means such as robot 146 are provided adjacent the fixed and movable platen having track 147 for carrying robot arm 148 (see Fig. 7) which in turn carries robot plate 149. Robot plate contains adjacent thereto a number of parison carrying means 150 corresponding to the number of parisons prepared in the injection molding machine. Carrying means 150 are open ended hollow tubes having channel means 151 at the base thereof connected to vacuum or suction means 152 for holding the parisons in the tubes. Thus, parisons are formed in injection molding machine 140, movable platen 142 disengages from the fixed platen 141 and robot arm 148 carrying robot plate 149 moves between the fixed and movable platen so that parison carrying means or tubes 150 engage parisons 131. Suction means 152 is used to transfer parisons 131 from the injection molding machine to tubes 150 and retain the parisons therein. Robot plate 149 is then moved out from between fixed platen 141 and movable platen 142 and rotated so that robot plate 149 is placed adjacent receiving station 112 as shown in Fig. 7. Parisons 131 are then delivered to pallets 111 by releasing the suction from suction means 152. Parisons 131 are then released so that the open neck portion 132 engages plugs 130 with guide tube 160 supported by support frame 161 insuring that the parisons are properly directed to engage plugs 130. Referring to Fig. 7, it can be seen that the parisons 131 are properly seated on plugs 130. As shown in phantom in Fig. 7, open neck 132 indicates the position of the parison in tubes 150.

After the parisons are loaded on pallets 111 the pallets are transferred one at a time from the receiving station to the first conveyor means 111. Simultaneously therewith, an empty pallet is transferred from the second conveyor means to the receiving station. This operation can be seen in Figs. 8 and 8A wherein pusher means 162 is provided above the level of the pallets having a pusher frame 163 and pusher rods 164 journaled therein. Pusher frame 163 carries forward pusher arms 165 and rearward pusher arms 166. The forward pusher arms 165 engage the pallet adjacent the first conveyor means and the rearward pusher arms 166 engage the pallet on the second conveyor means. Upon activation of pusher 162 pusher arms 165 and 166 cooperate to move the pallet adjacent the first conveyor means from the receiving station to the first conveyor means and the pallet from the second conveyor means to the receiving station. This operation is continued until the pallets with parisons thereon are moved one at a time from the receiving station to the first conveyor means and until empty pallets from the second conveyor means are moved to the receiving station so that the receiving station contains a series of empty pallets corresponding to the product output of the injection molding machine. The parisons are then transferred from the injection molding machine to the empty pallets at the receiving station as described hereinabove.

As indicated hereinabove, the initial step of the temperature conditioning cycle for conditioning the parisons from the injection molding machine to the finishing station is the post cooling operation conducted in the parison carrying means or tubes 150. Preferably, the parison carrying means or tubes are provided with heat transfer means which will be described in more detail hereinbelow in order to post cool the still warm parisons from the injection molding operation.

The parisons are then transported from the receiving station 112 to the finishing station 113 on first conveyor means 110. A temperature conditioning means 170 is provided adjacent the first conveyor means 110 so that parisons 131 can have their temperature properly conditioned on their path from the receiving station to the finishing station. The purpose of the temperature conditioning means is to condition the temperature of the parison to render same suitable for forming into hollow plastic articles at the finishing station. The features of the preferred temperature conditioning means can be clearly seen in Fig. 9. The plastic parisons 131 on pallets 111 pass through temperature conditioning means 170 in a single row. The temperature conditioning means first equalizes the temperature of the parisons and second obtains the desired temperature profile for forming said parisons into hollow plastic articles. Fig. 9 shows conditioning tunnel 171 surrounding parisons 131 and containing temperature conditioning means 172 adjacent parisons 131. A plurality of such temperature conditioning means 172 are provided along the length of the parisons in order to provide the exact temperature profile needed by the parison in the finishing operation. The temperature conditioning means may be radiant or air jets and these may also be used to first equalize the temperature of the parisons. The parisons arrive at the first conveyor means with an unequal distribution of temperature between the inside and outside thereof. Thus, it is the first stage of the temperature conditioning means to equalize the temperature between the inside and outside thereof by means of temperature conditioning means 172 or if desired simply air jets in the initial stage of the conditioning tunnel 171. After the temperature of the parison has been equalized, a plurality of temperature conditioning means 172 may be provided adjacent various points along the length of the parison in order to provide the exact temperature distribution desired for the particular plastic and particular bottle configuration. One can very accurately control the temperature equalization and temperature profiling operation by controlling the length of the conditioning tunnel and the temperature conditioning means, and this despite the fact the individual pallets remain in the tunnel for different periods of time. Protective cover 173 is provided to protect the open neck portion 132 of the parisons so that the open neck portion is not subjected to the temperature equalization step. Safety cover 174 may be provided on the return flight in order to protect the empty pallets. If one desires to rotate the parisons during their passage through the temperature conditioning tunnel, stationary belt 175 or other means may be provided adjacent and in contacting relationship with pulley means 134 thus rotating the pulleys and hence the parisons. The speed of movement of the pallet, the diameter of the pulley and/or whether or not belt 175 is stationary or movable.

At the downstream end of the first conveyor means chain links 118 of the continuous chain pass around idler roll 180 and downstream sprocket 117 and idler roll 181 to start the return flight along second conveyor means 114.

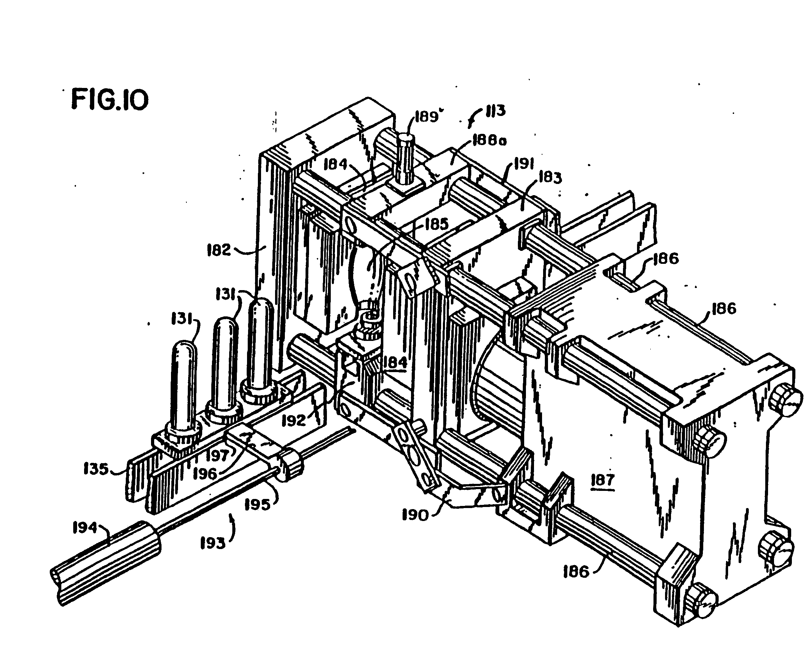

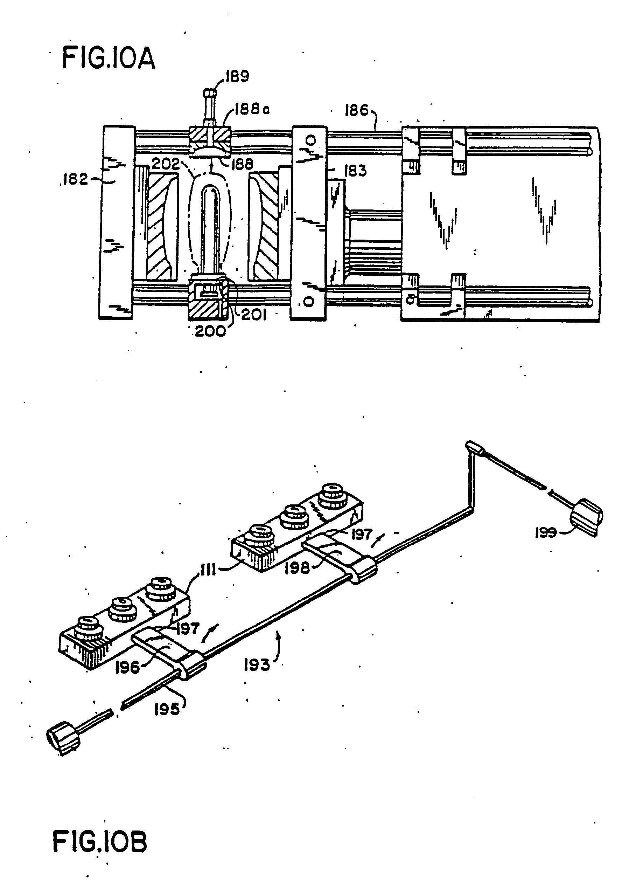

Referring now to Figs. 10, 10A and 10B, pallets 111 are retained in channel track 135 free from chain links 118 adjacent finishing station 113 carrying parisons 131 on plugs 130 ready for the finishing operation. Finishing station 113 as shown in Fig. 10 includes fixed platen 182 and movable platen 183 with blow mold 184 therebetween containing a mold 185 in the shape of the bottle to be formed. Movable platen 183 moves on tie rods 186 activated by motor 187. Optional base mold 188 is held by support 188a and is positioned above mold 185 to form the bottle bottom with piston 189 connected thereto for moving the bottom mold into appropriate alignment for formation of the desired base for the bottle and motive means, not shown, connected thereto for activating said piston. Linkage means 190 and 191 are provided connected to the movable platen 183 and bottom mold 188, respectively, in order to maintain the desired positioning thereof. Channel track 192 slides on tie rods 186 and sits spaced from but closely adjacent to channel track 135 being moved by top and bottom linkage means 190 and 191. For better clarity of the drawings, only bottom linkage means 190 is shown in Fig. 10. Engaging means 193 shown in Figs. 6A and 10B comprises a piston 194 having a piston arm 195 with a first engaging lug 196 engaging a groove 197 in an upstream pallet 111 and a second engaging lug 198 engaging a similar groove 197 in a downstream pallet 111. First engaging lug 196 and second engaging lug 198 are rotatable in the direction of the arrow to engage and disengage grooves 197. Thus, in operation first and second engaging lugs 196 and 198 are rotated to engage grooves 197 on a pallet 111 sitting outside finishing station 113 and a pallet sitting inside finishing station 113, respectively. The piston arm 195 then moves forward to move the pallet inside the finishing station with blown bottles thereon to a position outside the finishing station 113 and move a second pallet from a position outside the finishing station to a position inside the finishing station. Second piston 199 is now operated to rotate the first and second engaging lugs 196 and 198, respectively, to disengage grooves 197 and the piston arm is retracted to engage a further set of pallets for repeat of the cycle. Movable platen 183 is closed. Bottom mold 188 is moved into position via piston 189 and the blowing operation commenced. As shown specifically in Fig. 10A, a space 200 is provided to permit air to be inserted inside the parison although any other suitable means may be used for this purpose. If desired, a plug 201 can have a stretch rod associated therewith to axially stretch the parison in order to provide an oriented article and the parison is blown to its full shape as shown in Fig. 10A. When the blow mold is opened channel track 192 moves a desired distance guided by linkage means 190 in order to move the final blown article 202 the desired distance and free it from the mold 185. The pallet 111 with finished articles thereon is then moved from the finishing station to a point past or downstream of the finishing station. Pusher means 212 is located downstream of the finishing station connected to piston 213 which may be connected to any desired motive means. Track 214 engages discharge station 210 with return station 215. Thus, in operation piston 213 positions the pallet 111 containing blown articles 202 via pusher means 212 along tracks 214 to return station 215. At return station 215 the empty pallets are moved to the second conveyor means via second engaging means 216 which corresponds to engaging means 193. Located at return station 215 is discharge station 210 used to remove finished articles 202 from pallets 111 via for example a suction tube 211 or any desired means. The empty pallets are then transferred to the second conveyor means at a rate exactly corresponding to the movement of the pallets in the first conveyor means and in the finishing station. Although a particular engaging means has been shown, naturally any engaging means may be used to move the pallets in and out of the finishing station, and to move the empty pallets to the second conveyor means.

If desired the process and apparatus of the present invention may be conveniently employed to prepare multi-layered hollow plastic articles by applying a sleeve member either inside preform 131 or outside preform 131, with the composite preform consisting of preform 131 and sleeve member heated in temperature conditioning means 170 and blown together. For example, a sleeve or liner member may be applied to plugs 130 on their return flight on second conveyor means 114. Thus, pallets 111 return to receiving station 112 containing sleeve member thereon so that preform 131 is applied over the sleeve member and the composite conditioned and blown together at finishing station 113. Alternatively, a sleeve member may be applied on the outside of preform 131 downstream of receiving station 112 but before temperature conditioning means 170 so that the composite preform and sleeve member are conditioned together in the temperature conditioning means 170 and blown together at the finishing station 113. The resultant multi-layered article is characterized by properties of both materials, that is, the sleeve and preform, so that one can design a finished article having a desirable combination of properties not possible in a single layered material.

## Claims

1. A system for handling partly finished workpieces (25) periodically arriving at a receiving station (31) for transporting to a finishing station (46), comprising: presentation means (26) at said receiving station for making the arriving workpieces available; conveyor means (11, 14) moving from said receiving station to said finishing station (46); unloading means (47a, 47b) disposed along the path of said conveyor means (14) for removing the finished workpieces (25') from pallets (23); and a multiplicity of pallets (23) successively entrainable by said conveyor means between said receiving and finishing stations, each of said pallets (23) being provided with holding means (24) for releasably retaining a workpiece (25) available at said presentation means (26) characterized in that locating means (57a, 57b) are provided for temporarily consolidating the respective pallet (23) with an operative part (46a, 46b) of said finishing station (46) to obtain the proper positioning of said workpiece (25) with reference thereto, said finishing station (46) comprises a blow mold, and that said operative part comprises blow mold means (46a, 46b) clampingly engageable with said locating means (57a, 57b) during a blowing operation.

2. A system as defined in claim 1 characterized in that said presentation means comprises a take-off member (26) extracting said workpieces (25) from a pressure molding machine operating in synchronism with said finishing station (46).

3. A system for handling partly finished workpieces periodically arriving at a receiving station (31) for transportation to a finishing station (46), comprising: conveyor means (11, 12, 13, 14) including a first branch (11) moving from said receiving station (31) to said finishing station (46) and a second branch (12) moving from said finishing station (46) to said receiving station (31); a multiplicity of pallets (23) engageable by said conveyor means (11—14) for entrainment between said receiving and finishing stations (31, 46), each of said pallets (23) having holding means (24) for temporarily retaining at least one workpiece (25) arriving at said receiving station (31), characterized in that first transfer means (34) synchronized with said conveyor means are arranged for moving said pallets (23) from a downstream part of said second branch (12) to an upstream part of said first branch (11) by way of said receiving station (31) by at least one newly arrived workpiece (25), and second transfer means (48) synchronized with said conveyor means are arranged for moving said pallets (23) from a downstream part of said first branch (11) to an upstream part of said second branch (12) by way of said finishing station (46), with unloading of each passing pallet (23) ahead of said second branch (12).

4. A system as defined in claim 3 characterized in that said workpieces (25) are premolded parisons with necks (29) engageable by said holding means (24), said finishing station (46) being a blowing station provided with at least one pair of relatively displaceable blow mold halves (46a, 46b) and with a source of pressure fluid for inflating a parison (25) bracketed by said blow mold halves (46a, 46b), said holding means (24) comprising at least one tubular plug (24) forming a channel for the passage of said pressure fluid from said source through the respective pallet (23) into a parison whose neck (29) is penetrated by a tip of said plug (24), said tip projecting in said finishing station (46) between said blow mold halves to enable a clamping of said neck (29) between the latter and said tip during a blowing operation transforming the parison (25) into a final product (25').

5. A system as defined in claim 4 characterized in that said plug (24) is substantially vertical, further including a discharge station (47) immediately following said blowing station (46) having conduit means (50) for supplying pressure fluid from below through said plug (24) into the final product (25') carried thereon to dislodge said final product (25') from the pallet (23).

6. A system as defined in one of the claims 3 til 5 characterized in that the number of workpieces (25) retainable by said holding means (24) on a pallet (23) equals the number of workpieces (25) concurrently processable in said finishing station (46) during an operating cycle thereof, the number of workpieces (25) simultaneously arriving at said receiving station (31) during an interval equaling n times said operating cycle being n times the number of said concurrently processable workpieces (25), said first transfer means (34) forming in parallel tracks for the simultaneous transfer of as many pallets (23) from said second branch (12) to said first branch (11).

7. A system as defined in one of the claims 4 til 6 characterized in that said plug (24) is rotatably journaled in the respective pallet (23), further comprising a tempering chamber (40) traversed by parisons (25) on pallets (23) entrained by said first branch (11) during passage from said receiving station (31) to said finishing station (46), and drive means (42) adjacent said chamber (40) with said plug (24) for rotating same about an axis transverse to the path of pallet (23) motion together with the parison (25) carried thereon during passage of the parison (25) through said chamber (40).

8. A pallet for transporting partly finished workpieces (25) from a receiving station (31) to a finishing station (46), comprising: a body engageable by conveyor means (11—14) moving from said receiving station (31) to said finishing station (46); holding means (24) on said body for releasably retaining a workpiece (25) available at said receiving station (31); and locating means (57a, 57b) on said body for temporarily consolidating said body with an operative part of said finishing station (46) to ensure the proper positioning of said workpiece (25) with reference thereto.

9. A pallet as defined in claim 8 characterized in that said holding means is a plug (24) engageable with a neck (29) of a parison (25) constituting said workpiece (25) and said locating means is a socket (57a, 57b) wherein said plug (24) is received, said socket (57a, 57b) being clampingly engageable by blow mold means (46a, 46b) forming part of said finishing station (46).

10. A pallet as defined in claim 9 characterized in that said plug (24) is rotatably journaled in said socket (57a, 57b).

11. A pallet as defined in claim 9 or 10 characterized in that said plug (24) has a stem carrying a pulley (37) for enabling rotation of said plug (24) along with said parison (25) by external drive means (39, 42).

12. An apparatus for preparing hollow plastic articles (202) which comprises: a receiving station (112) for receiving a first number of plastic parisons (131); an injection molding machine (140) in spaced relationship to said receiving station (112) for injection molding said first number of plastic parisons (131) in an injection molding cycle for transfer to said receiving station (112) and means (146—149) for transferring said first number to said receiving station (112); a finishing station (113) for forming said plastic parisons (131) into said hollow plastic articles (202); a first conveyor means (110) moving from said receiving station (112) to said finishing station (113); second conveyor means (114) returning from said finishing station (113) to said receiving station (112); characterized in that a multiplicity of pallets (111) is provided successively entrainable by said first and second conveyor means (110, 114) in a single row, each of said pallets (111) being provided with holding means (130) for holding a second number of parisons (131) less than said first number, wherein said pallets (111) are operative to transfer said plastic parisons (131) from said receiving station (112) to said finishing station (113); means (213, 214) to transfer said pallets (111) from said finishing station (113) to said second conveyor means (114); means to transfer said pallets (111) from said second conveyor means (114) one at a time to said receiving station (112) until said holding means (130) at said receiving station (112) corresponds to said first number; means (162—166) for transferring said pallets (111) with said parisons (131) thereon one at a time from said receiving station (112) to first conveyor means (110); and means (193—199) for transferring said pallets (111) with said parisons (131) thereon one at a time from said first conveyor means (110) to said finishing station (113) to form hollow plastic articles (202).

13. An apparatus according to claim 12 characterized in that a temperature conditioning means (170) is arranged adjacent the first conveyor means (110) for conditioning the temperature of the parisons (131) to render same suitable for forming into said hollow plastic articles (202) at said finishing station (113) operative to condition the temperature of said parisons (131) to first equalize the temperature of said parisons (131) and second to obtain the desired temperature profile.

14. An apparatus according to claim 13 characterized in that an injection molding machine (140) is provided in spaced relationship to said receiving station (112) for injection molding a first number of plastic parisons (131) for transfer to said receiving station (112) and means (146—149) for transferring said first number to said receiving station (112).

15. An apparatus according to claim 14 characterized in that post-cooling means (159) are provided between the injection molding machine (140) and receiving station (112) for post-cooling the parisons (131).

16. A process for preparing hollow plastic articles (202) which comprises: transferring a plurality of plastic parisons (131) from an injection molding machine (140) for injection molding a first number of plastic parisons (131) by means (146—149) for transferring said first number to a multiplicity of pallets (111) at a receiving station (112); conveying said pallets (111) with parisons (131) thereon in a single row from said receiving station (112) to a finishing station (113) for forming said parisons (131) into said hollow plastic articles (202); providing a temperature conditioning means (170) between said receiving station (112) and finishing station (113) and conditioning the temperature of the parisons (131) to render same suitable for forming into said hollow plastic articles (202) at said finishing station (113) and transporting said pallets (111) with parisons (131) thereon through said temperature conditioning means (170) in a single row to first equalize the temperature of said parisons (131) and second obtain the desired temperature profile for forming into said hollow plastic articles (202) and transferring said pallets (131) with said parisons (131) thereon one at a time to said finishing station (113) to form hollow plastic articles (202).

17. A process according to claim 16 characterized in that said pallets (111) are removed from said receiving station (112) one at a time and are returned to said receiving station (112) one at a time.

18. A process according to claim 16 or 17 characterized in that said parisons (131) are transferred to said pallets (111) from an injection molding operation, with the output of the injection molding operation coordinated with the receiving station (112).

19. A process according to claim 18 characterized in that a step of post-cooling the parisons (131) is provided between the injection molding operation and the receiving station (112).

20. A process according to one of the claims 16 til 19 characterized in that the parisons (131) are rotated as they are transported through the temperature conditioning means (170).

**Patentansprüche**

1. Anlage zur Behandlung von teilweise bearbeiteten Werkstücken (25), welche periodisch an einer Empfangsstation (31) zum Transport zu einer Bearbeitungsstation (46) ankommen, mit einer Übergabeeinrichtung (26) an der Empfangsstation, um die ankommenden Werkstücke bereitzustellen, mit Transporteinrichtungen (11, 14), welche sich von der Empfangsstation zu der Bearbeitungsstation (46) bewegen mit einer Entladeeinrichtung (47a, 47b), welche an der Strecke der Transporteinrichtung (14) angeordnet ist, um die bearbeiteten Werkstücke (25') von Paletten (23) zu entnehmen, und einer Mehrzahl von Paletten (23), welche aufeinanderfolgen durch die Transporteinrichtungen zwischen der Empfangs- und der Bearbeitungsstation mitnehmbar sind, wobei jede der Paletten (23) mit Haltern (24) zum lösbaren Halten eines Werkstückes (25) bestückt ist, welches an der Übergabeeinrichtung erhältlich ist, dadurch gekennzeichnet, daß ein Aufnahmeelement (57a, 57b) zum zweitweisen Vereinigen der jeweiligen Palette (23) mit einem Arbeitsteil (46a, 46b) der Bearbeitungsstation (46) vorgesehen ist, um eine geeignete Positionierung des Werkstücks (25) in Bezug dazu zu erhalten, wobei die Bearbeitungsstation (46) eine Blasform umfaßt, und daß der genannte Arbeitsteil eine Blasformeinrichtung (46a, 46b) umfaßt, welche klammerartig mit dem Aufnahmeelement (57a, 57b) während des Blasvorganges zusammenwirkt.

2. Anlage gemäß Anspruch 1, dadurch gekennzeichnet, daß die Übergabeeinrichtung eine Entnahmeplatte (26) aufweist, welche die Werkstücke (25) aus einer Druckformmaschine entnimmt, die synchron mit der Bearbeitungsstation (46) arbeitet.

3. Anlage zur Behandlung von teilweise bearbeiteten Werkstücken (25), welche periodisch an einer Empfangsstation (31) zum Transport zu einer Bearbeitungsstation (46) ankommen, mit Transporteinrichtungen (11, 12, 13, 14), welche eine erste Bahn (11), die sich von der Empfangsstation (31) zu der Bearbeitungsstation (46) bewegt, und eine zweite Bahn (12) umfaßt, die sich von der Bearbeitungsstation (46) zu der Empfangsstation (31) bewegt, mit einer Mehrzahl von Paletten (23), welche den Transporteinrichtungen (11—14) zum Mitführen zwischen Empfangs- und Bearbeitungsstation (31, 46) zugeordnet sind, wobei jede der Paletten (23) Halteeinrichtungen (24) zum zeitweisen Festhalten von zumindest einem Werkstück (25) aufweist, welches an der Empfangsstation (31) ankommt, dadurch gekennzeichnet, daß eine erste Übergabeeinrichtung (34), welche synchron mit den Transporteinrichtungen arbeitet, vorgesehen ist zum Bewegen der Paletten (23) von einem unteren Teil der zweiten Bahn (12) zu einem oberen Teil der ersten Bahn (11) durch die Bearbeitungsstation (31) mit zumindest einem neu angekommenen Werkstück (25) und daß eine zweite Übergabeeinrichtung (48), welche synchron mit den Transporteinrichtungen läuft, angeordnet ist zum Bewegen der Paletten (23) von einem unteren Teil der ersten Bahn (11) zu einem oberen Teil der zweiten Bahn (12) durch die Bearbeitungsstation (46), wobei jede der durchlaufenden Paletten (23) vor der zweiten Bahn (12) entladen wird.

4. Anlage gemäß Anspruch 3, dadurch gekennzeichnet, daß die Werkstücke (25) vorgeformte Vorformlinge mit Hälsen (29) sind, welche durch die Halteeinrichtung (24) haltbar sind, wobei die Bearbeitungsstation (46) eine Blasstation ist, welche mit zumindest einem Paar von relativ zueinander bewegbaren Blasformhälften (46a, 46b) und mit einer Druckmittelquelle versehen ist zum Aufblasen eines Vorformlings (25), der von den Blasformhälften (46a, 46b) umklammert wird, wobei die Halteeinrichtung (24) zumindest einen röhrenförmigen Steckzapfen (24) umfaßt, der einen Druchlaßkanal für das Druckmedium von der Quelle durch die jeweilige Palette (23) in den Vorformling umfaßt, dessen Hals (29) von einer Spitze des Steckzapfens (24) durchdrungen ist, wobei die Spitze in der Bearbeitungsstation (46) zwischen die Blasformhälften hineinragt, um ein Umklammern des Halses (29) zwischen letzteren und der Spitze während eines Blasvorganges zu ermöglichen, in welchem der Vorformling (25) in ein Endprodukt (25') umgewandelt wird.

5. Anlage gemäß Anspruch 4, dadurch gekennzeichnet, daß der Steckzapfen (24) im wesentlichen vertikal ausgerichtet ist und daß weiter eine Austragsstation (47) ummittelbar folgend auf die Blasstation (46) vorgesehen ist, welcher Leitungen (50) zum Anlegen von Druckmedium von unten her durch den Steckzapfen (24) in das von ihm getragene Endprodukt vorgesehen sind, um das Endprodukt (25) von der Palette (23) zu entfernen.

6. Anlage gemäß einem der Ansprüche 3 bis 5, dadurch gekennzeichnet, daß die Zahl der Werkstücke (25), welche durch die Halteeinrichtung (24) auf einer Palette (23) gehalten werden, der Zahl der Werkstücke gleicht, die gleichzeitig in der Bearbeitungsstation (46) während eines Arbeitszyklus bearbeitet werden, wobei die Anzahl der Werkstücke (25), welche gleichzeitig an der Empfangsstation (31) ankommen, während eines Intervalls dem n-Fachen entsprechen, wobei der Arbeitszyklus das n-Fache der Anzahl der gleichzeitig bearbeitbaren Werkstücke (25) ist und wobei die erste Übergabeeinrichtung (34) in parallelen Schienen zur gleichzeitigen Übergabe von mehreren Paletten (23) von der zweiten Bahn (12) auf die erste Bahn (11) ausgestaltet ist.

7. Anlage gemäß einem der Ansprüche 4 bis 6, dadurch gekennzeichnet, daß der Steckzapfen (24) drehbar mit der jeweiligen Palette (23) verbunden ist und daß ferner eine Temperierkammer (40) vorgesehen ist, welche von den Vorformlingen (25) auf den Paletten (23) durchquert wird, die von der ersten Bahn (11) während dem Weg von der Empfangsstation (31) zu der Bearbeitungsstation (46) mitgenommen werden, und daß ferner eine Antriebseinheit (42) nahe der Kammer (40) und dem Steckzapfen (24) vorgesehen ist, um denselben um eine Achse quer zur Transportrichtung der Palette (23) zu drehen und zwar zusammen mit dem darauf angeordneten Vorformling (25) während der Passage des Vorformlings (25) durch die Kammer (40).

8. Palette zum Transportieren von teilweise bearbeiteten Werkstücken (25) von einer Empfangsstation (31) zu einer Bearbeitungsstation (46) mit einem Palettenkörper, der einsetzbar in Trnsporteinrichtungen (11—14) ist, die sich von einer Empfangsstation (31) zu einer Bearbeitungsstation (46) bewegen, mit einer Halteeinrichtung (24) auf diesem Körper zum lösbaren Festhalten von Werkstücken (25), welche an der Empfangsstation (31) erhältlich sind, und mit Aufnahmeelementen (57a, 57b) auf diesem Körper zum zeitweisen Vereinigen dieses Körpers mit einem Arbeitsteil der Bearbeitungsstation (46), um die geeignete Ausrichtung des Werkstücks (25) in Bezug auf den Arbeitsteil zu sichern.

9. Palette gemäß Anspruch 8, dadurch gekennzeichnet, daß die Halteeinrichtung ein Steckzapfen (24) ist, welcher in einen Hals (29) eines Vorformlings (25) einsetzbar ist, der das Werkstück (25) darstellt und daß das Aufnahmeelement eine Steckhülse (57a, 57b) ist, in welcher der Steckzapfen (24) aufgenommen ist, wobei die Steckhülse (57a, 57b) klammerartig durch eine Blasformeinrichtung (46a, 46b) umfaßt wird, welche einen Teil der Bearbeitungsstation (46) ausbildet.

10. Palette gemäß Anspruch 9, dadurch gekennzeichnet, daß der Steckzapfen (24) drehbar in der Steckhülse (57a, 57b) angeordnet ist.

11. Palette gemäß Anspruch 9 oder 10, dadurch gekennzeichnet, daß der Steckzapfen (25) einen Stamm aufweist, der eine Riemenscheibe (37) trägt, welche die Drehung des Steckzapfens (24) zusammen mit dem Vorformling (25) durch eine externe Antriebseinheit (39, 42) ermöglicht.

12. Vorrichtung zum Herstellen hohler Kunststoffartikel, welche umfaßt: eine Empfangsstation (112) zur Aufnahme einer ersten Anzahl von Kunststoffvorformlingen (131); eine Spritzgießmaschine (140) in räumlich getrennter Nachbarschaft zu der Empfangsstation (112) zum Spritzgießen einer ersten Anzahl von Kunststoffvorformlingen (131) in einem Spritzgießzyklus, welche an die Empfangsstation (112) übergeben werden und Einrichtungen (146—149) zur Übergabe der ersten Anzahl an diese Empfangsstation (112); eine Bearbeitungsstation (113) zum Formen der Kunststoffvorformlinge (131) in die hohlen Kunststoffartikel (202); eine erste Transporteinrichtung (110), welche sich von der Empfangsstation (112) zu der Bearbeitungsstation (113) bewegt; eine zweite Transporteinrichtung (114), welche von der Bearbeitungsstation (113) zu der Empfangsstation (112) zurückkehrt, dadurch gekennzeichnet, daß eine Mehrzahl von Paletten (111) vorgesehen ist, welche aufeinanderfolgend von der ersten und zweiten Transporteinrichtung (110, 114) in einer einzigen Reihe mitgenommen werden, wobei jede der Paletten (111) mit Halteeinrichtungen (130) zum Halten einer zweiten Anzahl von Vorformlingen (131) versehen ist, welche geringer als die erste Anzahl ist, wobei die Paletten (111) dazu geeignet sind, die Kunststoffvorformlinge (131) von der Empfangsstation (112) zu der Bearbeitungsstation (113) zu verbringen; Einrichtungen (213, 214) zur Übergabe der Paletten (111) von der Bearbeitungsstation (113) zu der zweiten Transporteinrichtung (114); Einrichtungen zur Übergabe der Paletten (111) von der zweiten Transporteinrichtung (114) zu der Empfangsstation (112) und zwar jeweils eine pro Zeiteinheit bis die Halteeinrichtungen (130) an der Empfangsstation (112) mit der ersten Anzahl übereinstimmt; Einrichtungen (162—166), um die Paletten (111) mit den Vorformlingen (131) darauf, und zwar jeweils eine innerhalb einer Zeiteinheit, von der Empfangsstation (112) zu der ersten Transporteinrichtung (110) zum übertragen; und Einrichtungen (193—199), um die Paletten (111) mit den Vorformlingen (131) darauf, und zwar eine pro Zeiteinheit, von der ersten Transporteinrichtung (110) in die Bearbeitungsstation (113) zu übergeben, um dort die hohlen Kunststoffartikel (202) herauszuformen.

13. Vorrichtung nach Anspruch 12, dadurch gekennzeichnet, daß eine Temperaturbehandlungseinrichtung (170) der ersten Transporteinrichtung (110) zugeordnet ist, um die Temperatur der Vorformlinge (131) zu regeln, damit letztere in einen geeigneten Zustand zur Formung in die hohlen Kunststoffartikel (202) in der Bearbeitungsstation (113) versetzt werden, wobei das wirksame Regeln der Temperatur der Vorformlinge (131) zuerst ein Ausgleichen der Temperatur der Vorformlinge (131) und in einem zweiten Schritt eine Erzielung eines gewünschten Temperaturprofils umfaßt.

14. Vorrichtung nach Anspruch 13, dadurch gekennzeichnet, daß eine Spritzgießmaschine (140) in räumlich getrennter Nachbarschaft zu der Empfangsstation (112) zum Spritzgießen einer ersten Anzahl von Kunststoffvorformlingen (131) zu deren Übergabe an die Empfangsstation (112) umfaßt und Einrichtungen (146—149) zum Übergeben dieser ersten Anzahl an die Empfangsstation (112).

15. Vorrichtung nach Anspruch 14, dadurch gekennzeichnet, daß eine Nachkühleinrichtung (159) zwischen der Spritzgießmaschine (140) und der Empfangsstation (112) zum Nachkühlen der Vorformlinge (131) angeordnet ist.

16. Verfahren zum Herstellen von hohlen Kunststoffartikeln (202), welches folgende Schritte umfaßt: Überführung einer Vielzahl von Kunststoffvorformligen (131) von einer Spritzgießmaschine (140) zum Spritzgießen einer ersten Anzahl von Kunststoffartikeln (131), durch Einrichtungen (146—149) zum Übertragen dieser ersten Anzahl zu einer Mehrzahl von Paletten (111) in einer Empfangsstation (112); Transportieren von Paletten (111) mit den Vorformlingen (131) darauf in einer einzigen Reihe von der Empfangsstation (112) zu einer Bearbeitungsstation (113), um dort die Vorformlinge (131) in die Kunststoffartikel (202) zu formen; das Vorsehen einer Temperaturbehandlungseinrichtung (170) zwischen der Empfangsstation (112) und der Bearbeitungsstation (113) und die Behandlung der Temperatur der Vorformlinge (131), um diese in einen geeigneten Zustand zum Formen in hohle Kunststoffartikel (202) in der Bearbeitungsstation (113) zum bringen und das Transportieren der Paletten (111) mit den Vorformlingen (131) darauf durch die Temperaturbehandlungseinrichtung (170) in einer einzigen Reihe, um zuerst die Temperatur der Vorformlinge (131) abzugleichen und zweitens ein gewünschtes Temperaturprofil zu erhalten zum Formen in die hohlen Kunststoffartikel (202) und den Transport der Paletten (111) mit den Vorformlingen (131) darauf, und zwar eine in einer Zeiteinheit, zu der Bearbeitungsstation (113), um dort die hohlen Kunststoffartikel (202) zu formen.

17. Verfahren nach Anspruch 16, dadurch gekennzeichnet, daß die Paletten (111) von der Empfangsstation (112), und zwar eine pro Zeiteinheit, wegbewegt und wieder zu der Empfangsstation (112), und zwar eine pro Zeiteinheit, zurückgeführt wird.

18. Verfahren nach Anspruch 16 oder 17, dadurch gekennzeichnet, daß die Vorformlinge (131) von einem Spritzgießvorgang auf die Paletten (111) übergeben werden entsprechend dem Ausstoß des Spritzgießvorganges, welcher mit der Bearbeitungsstation (113) koordiniert ist.

19. Verfahren nach Anspruch 18, dadurch gekennzeichnet, daß ein Arbeitsschritt der Nachkühlung der Vorformlinge (131) zwischen dem Spritzgießvorgang und der Empfangsstation (112) vorgesehen ist.

20. Verfahren nach einem der Ansprüche 16 bis 19, dadurch gekennzeichnet, daß die Vorformlinge (131) gedreht werden, wenn sie durch die Temperaturbehandlungseinrichtung (170) transportiert werden.

**Revendications**

1. Système pour manipuler des pièces partiellement terminées (25) arrivant périodiquement dans un poste de réception (31) pour être transportées dans un poste de finition (46), comprenant: des moyens de présentation (26) placés dans le poste de réception pour rendre disponibles les pièces, qui arrivent; des moyens de convoyeur (11, 14) se déplaçant du poste de réception vers le poste de finition (46); des moyens de déchargement (47a, 47b) disposés le long du chemin des moyens de convoyeur (14) pour retirer les pièces terminées (25') de palettes (23); et un certain nombre de palettes (23) pouvant être entraînées successivement par les moyens de convoyeur entre les postes de réception et de finition, chacune de ces palettes (23) étant munie de moyens de maintien (24) destinés à retenir de façon libérable une pièce (25) disponible dans les moyens de présentation (26); système caractérisé en ce que des moyens de positionnement (57a, 57b) sont utilisés pour consolider provisoirement la palette considérée (23) par une partie active (46a, 46b) du poste de finition (46) de manière à obtenir le positionnement convenable de la pièce (25) par rapport à celui-ci, en ce que le poste de finition comprend un moule à soufflage, en ce que la partie active comprend des moyens de moule à soufflage (46a, 46b) pouvant être bloqués en place par les moyens de positionnement (57a, 57b) pendant une opération de soufflage.

2. Système selon la revendication 1, caractérisé en ce que les moyens de présentation comprennent un élément d'enlèvement (26) destiné à extraire les pièces (25) d'une machine de moulage sous pression fonctionnant en synchronisme avec le poste de finition (46).

3. Système pour manipuler des pièces partiellement terminées arrivant périodiquement dans un poste de réception (31) pour être transportées dans un poste de finition (46), comprenant: des moyens de convoyeur (11, 12, 13, 14) comprenant une première branche (11) se déplaçant du poste de réception (31) vers le poste de finition (46), et une seconde branche (12) se déplaçant du poste de finition (46) vers le poste de réception (31); un certain nombre de palettes (23) pouvant s'engager sur les moyens de convoyeur (11—14) pour être entraînées entre les postes de réception et de finition (31, 46), chacune de ces palettes (23) comportant des moyens de maintien (24) destinés à retenir provisoirement au moins une pièce (25) arrivant dans le poste de réception )31); système caractérisé en ce que des premiers moyens de transfert (34) synchronisés avec les moyens de convoyeur sont utilisés pour déplacer les palettes (23) d'une partie aval de la seconde branche (12) vers une partie amont de la première branche (11) dans le poste de réception (31) par au moins une pièce nouvellement arrivée (25), et en ce que des seconds moyens de transfert (48) synchronisés avec les moyens de convoyeur sont utilisés pour déplacer les palettes (23) d'une partie aval de la première branche (11) vers une partie amont de la seconde branche (12) dans le poste de finition (46), tout en déchargeant chaque palette qui passe (23) en avant de la seconde branche (12).

4. Système selon la revendication 3, caractérisé en ce que les pièces (25) sont des paraisons prémoulées munies de goulots (29) pouvant être attrapés par les moyens de maintien (24), le poste de finition (46) étant un poste de soufflage muni d'au moins une paire de moitiés de moule à soufflage pouvant se déplacer l'une par rapport à l'autre (46a, 46b) et d'une source de fluide sous pression destinée à gonfler une paraison (25) prise en sandwich entre les moitiés de moule à soufflage (46a, 46b), les moyens de maintien (24) comprenant au moins un bouchon tubulaire (24) formant un conduit de passage du fluide sous pression partant de la source et passant par la palette correspondante (23) pour pénétrer dans une paraison dont le goulot (29) est pénétré par un bout du bouchon (24), ce bout de bouchon faisant saillie dans le poste de finition (46) entre les moitiés de moule à soufflage pour permettre le blocage du goulot (29) entre celles-ci et le bout du bouchon pendant une opération de soufflage transformant la paraison (25) en un produit final (25').

5. Système selon la revendication 4, caractérisé en ce que le bouchon (24) est essentiellement vertical et en ce que le système comprend en outre un poste de déchargement (47) placé juste à la suite du poste de soufflage (46) et comportant des moyens de conduit (50) destiné à fournir le fluide sous pression par le dessous et à travers le bouchon (24) dans le produit final (25') monté sur le bouchon, de manière à déloger ce produit final (25') de la palette (23).

6. Système selon l'une quelconque des revendications 3 à 5, caractérisé en ce que le nombre de pièces (25) pouvant être retenues par les moyens de maintien (24) sur une palette (23) est égal au nombre de pièces (25) pouvant être traitées simultanément dans le poste de finition (46) pendant un cycle de fonctionnement de celui-ci, en ce que le nombre de pièces (25) arrivant simultanément dans le poste de réception (31) pendant un intervalle de temps égal à n fois le cycle de fonctionnement, est égal à n fois le nombre de pièces (25) pouvant être traitées simultanément, et en ce que les premiers moyens de transfert (34) forment un parallèle des pistes destinées à transférer simultanément le nombre de palettes (23) de la seconde branche (12) vers la première branche (11).

7. Système selon l'une quelconque des revendications 4 à 6, caractérisé en ce que le bouchon (24) est monté en rotation dans la palette (23) correspondante, et en ce que le système comprend en outre une chambre de trempe (40) dans laquelle passent les paraisons (25) montées sur les palettes (23) entraînées par la première branche (11) pendant le passage du poste de réception (31) vers le poste de finition (46), et des moyens d'entraînement (42) placés au voisinage de la chambre (40) de façon que le bouchon (24) fasser tourner celle-ci autour d'un axe transversale par rapport au chemin de passage de la palette (23) portant la paraison (25) sur celle-ci, pendant le passage de cette paraison (25) dans la chambre (40).

8. Palette destinée à transporter des pièces partiellement terminées (25) d'un poste de réception (31) vers une poste de finition (46), palette caractérisée en ce qu'elle comprend: un corps pouvant s'engager sur les moyens de convoyeur (11—14) se déplaçant du poste de réception (31) vers le poste de finition (46); des moyens de maintien (24) montés sur le corps pour retenir de façon libérable une pièce (25) disponible dans le poste de réception (31); et des moyens de positionnement (57a, 57b) montés sur le corps pour consolider provisoirement ce corps par une partie active du poste de finition (46) de manière à s'assurer du positionnement convenable de la pièce (25) par rapport à celui-ci.

9. Palette selon la revendication 8, caractérisée en ce que les moyens de maintien sont constitués par un bouchon (24) pouvant s'engager dans le goulot (29) d'une paraison (25) constituant la pièce (25), en en ce que les moyens de positionnement sont constitués par une douille (57a, 57b) dans laquelle le bouchon (24) vient se loger, cette douille (57a, 57b) pouvant venir se bloquer dans les moyens de moule (46a, 46b) pour faire partie du piston de finition (46).

10. Palette selon la revendication 9, caractérisée en ce que le bouchon (24) est monté en rotation dans la douille (57a, 57b).

11. Palette selon l'une quelconque des revendications 9 et 10, caractérisée en ce que le bouchon (24) comporte une tige portant une poulie (37) pour qu'on puisse faire tourner ce bouchon (24) en même temps que la paraison (25) par des moyens d'entraînement extérieurs (39, 42).

12. Appareil pour préparer des articles de matière plastique creux (202), cet appareil comprend: un poste de réception (112) destiné à recevoir un premier nombre de paraisons de matière plastique (131); une machine de moulage par injection (140) placée à une certaine distance du poste de réception (112) pour mouler par injection le premier nombre de paraisons de matière plastique (131) dans un cycle de moulage par injection afin de les transformer dans le poste de réception (112), et des moyens (146—149) destinés à transférer le premier nombre de paraisons dans le poste de réception (112); un poste de finition (113) destiné à donner aux paraisons de matière plastique (131) la forme des articles de matière plastique creux (202); des premiers moyens de convoyeur (110) se déplaçant du poste de réception (112) vers le poste de finition (113); et des seconds moyens de convoyeur (114) revenant du poste de finition (113) vers le poste de réception (112); appareil caractérisé en ce qu'il utilise un certain nombre de palettes (111) pouvant être entraînées successivement par les premiers et seconds moyens de convoyeur (110, 114) en une seule rangée, chacune des palettes (111) étant munie de moyens de maintien (130) destinés à maintenir un second nombre de paraisons (131) inférieur au premier nombre ci-dessus, et les palettes (111) servant à transférer les paraisons de matière plastique (131) du poste de réception (112) vers le poste de finition (113); des moyens (213, 214) destinés à transférer les palettes (111) du poste de finition (113) vers les seconds moyens de convoyeur (114); des moyens destinés à transférer les palettes (111), une par une, des seconds moyens de convoyeur (114) vers le poste de réception (112) jusqu'à ce que les moyens de maintien (130) placés dans le poste de réception (112) correspondent au premier nombre; des moyens (162—166) destinés à transférer, une par une, les palettes (111) portant les paraisons (131) sur celles-ci, du poste de réception (112) vers les premiers moyens de convoyeur (110); et des moyens (193—199) destinés à transférer, une par une, les palettes (111) portant les paraisons (131) sur celles-ci, des premiers moyens de convoyeur (110) vers le poste de finition (113) de manière à former les articles de matière plastique creux (202).

13. Appareil selon la revendication 12, caractérisé en ce que des moyens de conditionnement de température (170) sont placés au voisinage des premiers moyens de convoyeur (110) pour conditionner la température des paraisons (131) de manière à les préparer pour qu'on puisse leur donner la forme des articles de matière plastique creux (202) dans le poste de finition (113) fonctionnant pour conditionner la température des paraisons (131) de manière à égaliser tout d'abord la température des paraisons (131) et à obtenir ensuite le profil de la température voulu.

14. Appareil selon la revendication 13, caractérisé en ce qu'il utilise une machine de moulage par injection (140) placée à une certaine distance du poste de réception (112) pour mouler par injection un premier nombre de paraisons de matière plastique (131) à transférer dans le poste de réception (112), et des moyens (146—149) destinés à transférer le premier nombre de paraisons dans le poste de réception (112).

15. Appareil selon la revendication 14, caractérisé en ce que des moyens de post-refroidissement (159) sont utilisés entre la machine de moulage par injection (140) et le poste de réception (112) pour effectuer un post-refroidissement des paraisons (131).

16. Processus pour préparer des articles de matière plastique creux (202), processus caractérisé en ce qu'il consiste à: transférer un certain nombre de paraison de matière plastique (131) provenant d'une machine de moulage par injection (140) destinée à mouler par injection un premier nombre de paraison de matière plastique (131), grâce à des moyens (146—149) destinés à transférer le premier nombre de paraisons sur un certain nombre de palettes (111) dans un poste de réception (112); transporter, en une seule rangée, les palettes (111) portant les paraisons (131) sur celles-ci, du poste de réception (112) vers un poste de finition (113) destiné à donner aux paraisons (131) la forme des articles de matière plastique creux (202); utiliser des moyens de conditionnement de température (170) entre le poste de réception (112) et le poste de finition (113), et conditionner la température des paraisons (131) pour les préparer de façon qu'on puisse leur donner la forme des articles de matière plastique creux (202) dans le poste de finition (113); et transporter, en une seule rangée, les palettes (111) portant les paraisons (131) sur celles-ci à travers les moyens de conditionnement de température (170), tout d'abord pour égaliser la température des paraisons (131) et ensuite pour obtenir le profil de température voulu de manière à donner aux paraisons la forme des articles de matière plastique creux (202), et transférer, une par une, les palettes (111) portant les paraisons (131) sur celles-ci, vers le poste de finition (113) destiné à former les articles de matière plastique creux (202).

17. Processus selon la revendication 16, caractérisé en ce que les palettes (111) sont retirées une par une du poste de réception (112), et ramenées une par une dans ce poste de réception (112).

18. Processus selon l'une quelconque des revendications 16 et 17, caractérisé en ce que les paraisons (131) sont transférées sur les palettes (111) à leur sortie d'une opération de moulage par injection, la sortie de cette opération de moulage par injection étant coordonnée avec le poste de réception (112).

19. Processus selon la revendication 18, caractérisé en ce qu'une étape de post-refroidissement des paraisons (131) eut utilisée entre l'opération de moulage par injection et le poste de réception (112).

20. Processus selon l'une quelconque des revendications 16 à 19, caractérisé en ce que les paraisons (131) sont entraînées en rotation lorsqu'elles sont transportées à travers les moyens de conditionnement de température (170).

15

FIG.1

FIG.2

25a'

25a

46a

58

24

57a

52

51a

37a

23

54 53a

25b

57b

51b

37b

FIG. 3

FIG.4

EP 0 173 818 B1

FIG.5

FIG.6

EP 0 173 818 B1

FIG.6A

EP 0 173 818 B1

# FIG.7

FIG.8

FIG.8A

FIG.9

EP 0 173 818 B1

FIG.10

FIG.10A

FIG.10B